(19) Europäisches Patentamt
European Patent Office
Office européen des brevets

(11) Veröffentlichungsnummer: **0 065 191**
**B1**

# (12) EUROPÄISCHE PATENTSCHRIFT

(45) Veröffentlichungstag der Patentschrift: **08.08.84**

(51) Int. Cl.³: **C 23 F 11/14**, E 21 B 41/02

(21) Anmeldenummer: **82103836.1**

(22) Anmeldetag: **05.05.82**

## (54) Inhibitoren gegen die Korrosion von H2S und CO2 in Wasser-in-Öl-Emulsionen.

(30) Priorität: **15.05.81 DE 3119376**

(43) Veröffentlichungstag der Anmeldung: **24.11.82 Patentblatt 82/47**

(45) Bekanntmachung des Hinweises auf die Patenterteilung: **08.08.84 Patentblatt 84/32**

(84) Benannte Vertragsstaaten: **BE DE FR GB IT NL**

(56) Entgegenhaltungen:
**EP - A - 0 050 736**
**US - A - 3 282 056**
**US - A - 3 965 027**

(73) Patentinhaber: **BASF Aktiengesellschaft, Carl-Bosch-Strasse 38, D-6700 Ludwigshafen (DE)**

(72) Erfinder: **Oppenlaender, Knut, Dr., Otto-Dill-Strasse 13, D-6700 Ludwigshafen (DE)**
Erfinder: **Stork, Karl, Dr., Reutersgarten 1, D-6840 Lampertheim (DE)**
Erfinder: **Barthold, Klaus, Dr., Paulusbergstrasse 4, D-6800 Mannheim (DE)**

**EP 0 065 191 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft die Verwendung von neuartigen Inhibitoren bzw. Inhibitorsysteme gegen die Korrosion durch $H_2S$ und $CO_2$ in Wasser-in-Öl-, insbesondere Salzwasser-in-Öl-Emulsionen.

Es ist bekannt und geübte Praxis, bei der Ölförderung, dem Transport und der Lagerung des Rohöls durch Injizieren eine Lösung oder Dispersion von Korrosionsinhibitoren in das Öl einzubringen, so daß sich auf der Oberfläche der mit dem Öl in Berührung kommenden Metallteile eine Schutzschicht ausbildet. Die Erdölemulsionen enthalten zumeist Salzwasser und in vielen Fällen — bedingt durch die Provenienz des Öls — $H_2S$ und $CO_2$, welche stark korrodierend wirken.

Die Inhibitoren hierfür sollen in Öl löslich und in Salzwasser zumindest dispergierbar sein, damit sie optimal wirken können.

Aus der DE-OS 28 46 977 sind derartige Systeme bekannt. Es handelt sich um Imidazolinium-Salze, die gelöst in einem öllöslichen organischen Lösungsmittel und in Gegenwart eines Kohlenwasserstofföls zur Anwendung gelangen.

Der Nachteil besteht in der relativ komplizierten Dosierungsform (3 Komponenten) und vor allem darin, daß der Korrosionsschutz noch nicht in allen Fällen befriedigt. Wir haben beispielsweise festgestellt, daß das in der genannten Publikation beschriebene Imidazolin der Formel

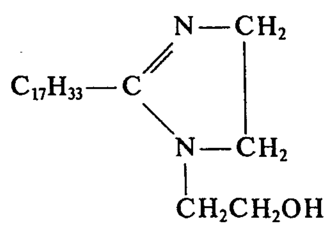

(als Chlorid) für sich allein keine genügende Wirkung gegen korrosiven Abtrag durch die Einwirkung von $H_2S$ entfaltet.

Das Ziel der Erfindung bestand nun darin, solche organische Verbindungen aufzufinden, die optimal gegen die $H_2S$- und $CO_2$-Korrosion in (Salz)wasser-in-Öl-Emulsionen wirken, und die in beiden Phasen ohne zusätzliche Lösungsmittelhilfe gleichmäßig verteilbar sind.

Dieses Ziel wird erfindungsgemäß mit den Ammoniumsalzen von niedermolekularen Polymaleinsäuren (Oligomaleinsäuren) erreicht, wie sie im Patentanspruch definiert sind. Es handelt sich somit um Salze primärer, sekundärer oder tertiärer Amine von Oligomaleinsäuren des Molgewichts von 200 bis 1500, wobei die Alkyl- oder Alkenylreste des Amins jeweils 9 bis 20 C-Atome enthalten. Besonders bevorzugt sind $C_{12}$- bis $C_{16}$-Alkylammoniumsalze, vor allem die Mono- oder Dialkylammoniumsalze, von denen Monoisotridecylammoniumsalze technisch von besonderem Interesse sind.

Die den Salzen zugrundeliegenden Oligomaleinsäuren sind nach verschiedenen Methoden erhältlich, die zum Stand der Technik gehören. Gemäß der GB-PS 1 349 969 wird z. B. Maleinsäureanhydrid (MSA) in einem inerten Lösungsmittel in Gegenwart von Acetanhydrid und $H_2O_2$ polymerisiert. Ähnlich verfährt man auch gemäß der DE-OS 2 047 340, wonach ebenfalls Acetanhydrid und $H_2O_2$ dem Polymerisationsansatz zugefügt werden. Eine bevorzugte Methode stellt die Arbeitsweise gemäß der DE-OS 2 840 167 dar, auf die hier ausdrücklich Bezug genommen wird. Diese Methode erlaubt es, in einem einzigen Arbeitsgang aus Maleinsäureanhydrid zu hydrolysierter Oligomaleinsäure zu gelangen, der gegenüber den oben genannten Verfahren unverfärbte Produkte liefert.

Man löst Maleinsäureanhydrid in der 1 bis 5fachen molaren Menge (100 bis 500 Molprozent — bezogen auf MSA) Acetanhydrid und gibt bei 80 bis 140° C, vorzugsweise 100 bis 120° C die 0,2 bis 0,5fache molare Menge (20—50 Molprozent, bezogen auf MSA) $H_2O_2$, vorzugsweise in Form einer 30 bis 50prozentigen wäßrigen Lösung zu. Nach der Zugabe läuft die Reaktion bei 100 bis 140° C, vorzugsweise 100 bis 120° C, innerhalb 1 bis 8 Stunden ab.

Die Zugabe des $H_2O_2$ kann sofort oder allmählich erfolgen, vorzugsweise läßt man das Wasserstoffperoxid langsam unter starker mechanischer Bewegung des Reaktionsansatzes bei den genannten Temperaturen zulaufen. Die Zugabedauer beträgt vorzugsweise 1 bis 5 Stunden.

Zur Beschleunigung der Reaktion und zur Verbesserung der Ausbeuten und der Reinheit der Polymerisate hat es sich als günstig erwiesen, dem Reaktionsansatz geringe Mengen (0,1 bis 3 Gewichtsprozent — bezogen auf MSA —, vorzugsweise 0,1 bis 2 Gewichtsprozent) einer anorganischen oder organischen Säure zuzusetzen.

Solche Säuren sind nichtoxidierend, und es seien beispielsweise Salzsäure, Schwefelsäure, Orthoborsäure, p-Toluolsäure, Phosphorsäure, Weinsäure, Citronensäure und/oder Adipinsäure genannt.

Ähnlich positiv wirkt sich der Zusatz von Reduktionsmitteln und vor allem von reduzierend wirkenden Säuren aus, die in den selben Mengen wie die oben genannten Säuren zugesetzt werden.

Als Reduktionsmittel kommen beispielsweise Hydrazin, Hydroxylamin und deren Salze, sodann Hydrochinon, Pyrogallol, Aldehyde, wie Formaldehyd, Acetaldehyd oder Glutardialdehyd in Betracht und als reduzierende Säuren, die bevorzugt zu empfehlen sind, weil sie Reduziervermögen und Säurewirkung vereinigen, seien unterphosphorige Säure, phosphorige Säure, schweflige Säure, sodann Aldehydsäuren, wie Glyoxylsäure, Phenolcarbonsäuren, wie Salicylsäure, und Zuckersäuren, wie Ascorbinsäure zu nennen. Auch Oxalsäure ist als reduzierende Säure mit Erfolg einsetzbar.

Die erfindungsgemäßen Salze erhält man durch einfaches Abmischen bzw. Neutralisieren der erhaltenen Oligomaleinsäure mit einem der

definitionsgemäßen Amine im Äquivalentverhältnis 1 : 1, bis ein pH-Wert von ca. 7 erreicht ist.

Polymaleinsäuren in freier Form oder als einfache Salze sind zwar aus den US-PS 4 105 581 und 4 018 702 sowie aus der DE-OS 2 806 342 als Korrosionsinhibitoren bekannt. Diese Stoffe wirken aber nur in reinwäßrigen Systemen, da sie nicht öllöslich sind, und benötigen, um optimale Ergebnisse zu erbringen, Zusätze von Phosphaten oder Phosphonaten (US-PS 4 105 581 und DE-OS 2 806 342), oder Zinkionen (US-PS 4 108 702).

Die erfindungsgemäßen Salze können den Emulsionen in Substanz oder vorverdünnt in einem Lösungsmittel in Mengen von 100 bis 10 000 ppm, vorzugsweise 100 bis 500 ppm zugesetzt werden.

Als Lösungsmittel kommen z. B. aromatische Kohlenwasserstoffe oder aliphatische Alkohole bzw. Alkoholgemische mit 6 bis 12 C-Atomen in Betracht.

Salzwasser-in-Öl-Emulsionen, denen die Inhibitoren zugesetzt werden können, treten z. B. bei der Förderung des Erdöls und dessen Transport auf.

Die erfindungsgemäß zu verwendenden Oligomaleinate werden gemäß einem älteren Vorschlag (EP-A-0 050 736) als Korrosionsinhibitoren in Mineralölen u. a. auch gegen $H_2S$ eingesetzt. Die Korrosion wird hier durch u. a. $H_2S$-haltiges Kondenswasser verursacht, das mit dem Öl keine Emulsion bildet. Ausdrücklich wird in dieser älteren Anmeldung darauf hingewiesen, daß die Oligomaleinate öllöslich sind und nicht emulgierend wirken, d. h. im Kondenswasser nicht emulgierbar geschweige denn löslich sind. Umso mehr muß es daher überraschen, daß die Stoffe nun auch bei Salzwasser-in-Öl-Emulsionen zum Einsatz gelangen können, d. h., daß sie gleichermaßen in der Wasser- und Ölphase so verteilt vorliegen, daß sie die korrosionsgefährdeten Metallteile, die im Gegensatz zu den Problemen gemäß der EP-A-0 050 736 sowohl durch das Öl als auch das Wasser benetzt werden, gleichmäßig schützen können — diese neu aufgefundene Eigenschaft ermöglicht somit die erfindungsgemäß wertvolle erweiterte Anwendungsform.

Die nun folgenden Beispiele erläutern die Erfindung.

## Beispiele

### a) Herstellung der Oligomaleinsäure

Einsatzstoffe

1000 Teile Maleinsäureanhydrid (MSA)
1400 Teile Acetanhydrid
10 Teile $H_3PO_3$
857 Teile einer 35 gew.-%igen wäßrigen $H_2O_2$-Lösung.

Durchführung

In einem Reaktionsgefäß mit Rückflußkühler, Rührer, Tropftrichter und Innenthermometer werden MSA und der Katalysator in Acetanhydrid bei Raumtemperatur gelöst.

Unter Rühren wird bei 105 bis 110°C innerhalb ca. 5 Stunden das 35%ige $H_2O_2$ zugetropft. Die Lösung färbt sich dabei dunkel, hellt sich aber gegen Ende der Reaktion wieder auf. Zur Beendigung der Polymerisation wird noch ca. 2 Stunden bei ca. 110°C nachgerührt.

Nun werden am absteigenden Kühler die niedrig siedenden Anteile (Wasser, Essigsäure) bei ca. 30 bis 75 mbar und 120°C Innentemperatur abdestilliert bzw. zur Trockene eingedampft. Anschließend wird im Trockenschrank getrocknet.

Ausbeute: quantitativ, Molgewicht: ca. 650

### b) Herstellung der Salze

#### Beispiel 1

146,25 g (0,225 Mol) der Polymaleinsäure werden unter Rühren in 146,25 g Wasser gelöst, anschließend wird bei 50 bis 60°C mit 320 g (1,61 Mol) Mono-i-tridecylamin auf pH 7 gestellt, wobei bis zur pH-Konstanz gerührt wird. Ausbildung zweier Phasen. Die wäßrige Phase wird abgetrennt und verworfen, die org. Phase im Vakuum bei 70°C und ca. 20 mbar zur Trockene eingedampft.

#### Beispiel 2

107,25 g (0,165 Mol) Polymaleinsäure werden unter Rühren in 107,25 g Wasser gelöst, anschließend wird bei 50 bis 60°C mit 402 g (1,056 Mol) Ditridecylamin auf pH 7 gestellt, wobei bis zur pH-Konstanz gerührt wird. Ausbildung zweier Phasen. Die wäßrige Phase wird abgetrennt und verworfen, die org. Phase im Vakuum bei 70°C und ca. 20 mbar zur Trockene eingedampft.

#### Beispiel 3

65 g (0,1 Mol) Polymaleinsäure werden in 65 g Wasser gelöst. Anschließend setzt man 207 g eines $C_8$- bis $C_{12}$-Alkoholgemisches (»Oxoöl«) zu und läßt 142 g (0,175 Mol) Mono-i-tridecylamin zutropfen, wobei ein pH-Wert von ca. 7 erreicht wird. Nach einstündigem Nachrühren bei 70 bis 80°C wird das Wasser destillativ bei 70°C und 20 mbar entfernt.

### c) Anwendung

Die Korrosionsinhibitoren wurden nach dem sog. dynamischen oder »Wheel«-Test geprüft. Es ist eine bei der Erdölförderung gängige Methode zur Prüfung von Inhibitoren.

Die Testcoupons sind Eisenbleche der Abmessung 130 mm · 10 mm · 1 mm). Diese werden geschmirgelt, mit Toluol entfettet und gewogen. Als Testmedium verwendeten wir Testbenzin, das 50 Gew.-% Salzwasser mit 3% NaCl-Gehalt

einemulgiert enthielt. Das Testmedium wurde zur Simulation der Feldbedingungen mit $H_2S + CO_2$ gesättigt und in Testflaschen abgefüllt. Dann wurden die zu prüfenden Inhibitoren in Mengen von 250 ppm eingegeben. Die Testblechstreifen wurden an den Flaschendeckeln befestigt und in die Testmedien eingehängt.

Danach wurden die Testflaschen auf einer rotierenden Achse (Wheel) befestigt, die sich mit 40 UpM in einem auf 80°C gehaltenen Wasserbad drehte. Die Dauer der Versuche betrug 16 Stunden.

Danach wurden die Teststreifen mit einer inhibierenden Säure gereinigt, entfettet, getrocknet und zur Bestimmung des Gewichtsverlustes gewogen. Die Auswertung erfolgt im Vergleich zum Blindwert (Versuch ohne Inhibitorzusatz).

Die Ergebnisse sind aus der folgenden Tabelle ersichtlich.

Tabelle

| Verbindung gemäß | Abtrag [mg/coupon] |
|---|---|
| Beispiel 1 | 19.2 |
| Beispiel 2 | 23.8 |
| Beispiel 3 | 19.0 |
| 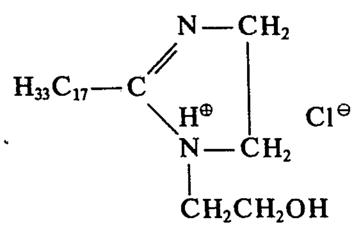 gem. DE-OS 28 46 977 | 51.0 |
| Blindwert | 98.3 |

**Patentanspruch**

Verwendung von Salzen von Polymaleinsäuren mit Molgewichten von 200 bis 1500 mit Aminen der Formel

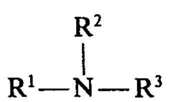

in der $R^1$ und $R^2$ gleich oder verschieden sind und für Wasserstoff oder $C_9$- bis $C_{20}$-Alkyl oder -Alkenyl und $R^3$ für $C_9$- bis $C_{20}$-Alkyl oder -Alkenyl stehen, als Inhibitoren gegen die Korrosion durch $H_2S$ und $CO_2$ in Wasser-in-Öl-Emulsionen.

**Claim**

The use of a salt derived from a polymaleic acid, having a molecular weight of from 200 to 1500, and an amine of the formula

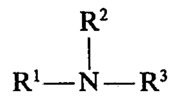

where $R^1$ and $R^2$ are identical or different and each denotes hydrogen, or alkyl or alkenyl of 9 to 20 carbon atoms, and $R^3$ denotes alkyl or alkenyl of 9 to 20 carbon atoms, as an inhibitor for corrosion caused by $H_2S$ and $CO_2$ in water-in-oil emulsions.

**Revendication**

Utilisation de sels d'acides polymaléiques d'un poids moléculaire de 200 à 1500 et d'amine de formule

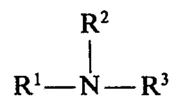

dans laquelle $R^1$ et $R^2$, qui sont identiques ou différents, représentent l'hydrogène ou des groupements alkyle ou alcényle en $C_9$ à $C_{20}$ et $R^3$ représente un groupement alkyle ou alcényle en $C_9$ à $C_{20}$, en tant qu'inhibiteurs contre la corrosion provoquée par $H_2S$ et $CO_2$ contenus dans des émulsions eau-dans-l'huile.